Europäisches Patentamt

European Patent Office

Office européen des brevets

(19)

(11) **EP 0 827 575 B1**

(12) **FASCICULE DE BREVET EUROPEEN**

| | |
|---|---|
| (45) Date de publication et mention de la délivrance du brevet: **22.03.2000 Bulletin 2000/12** | (51) Int Cl.⁷: **F16G 3/00** |
| (21) Numéro de dépôt: **97900628.5** | (86) Numéro de dépôt international: **PCT/FR97/00047** |
| (22) Date de dépôt: **10.01.1997** | (87) Numéro de publication internationale: **WO 97/26466 (24.07.1997 Gazette 1997/32)** |

(54) **DISPOSITIF DE JONCTIONNEMENT PERFECTIONNE POUR BANDES TRANSPORTEUSES ET PROCEDE DE FABRICATION**

VERBINDUNGSVORRICHTUNG FÜR FÖRDERBÄNDER UND HERSTELLUNGSVERFAHREN

IMPROVED CONVEYOR BELT JOINTING DEVICE AND METHOD FOR MAKING SAME

| | |
|---|---|
| (84) Etats contractants désignés: **BE CH DE ES GB IT LI NL SE** | (72) Inventeur: **JAKOB, Horst** **F-30360 Deaux (FR)** |
| (30) Priorité: **17.01.1996 FR 9600465** | (74) Mandataire: **Simonnot, Bernard et al** **Cabinet Simonnot** **35 rue de Clichy** **75442 Paris Cédex 09 (FR)** |
| (43) Date de publication de la demande: **11.03.1998 Bulletin 1998/11** | |
| (73) Titulaire: **Aser** **F-42405 Saint-Chamond (FR)** | (56) Documents cités: **WO-A-95/11393      DE-A- 2 532 409** **FR-A- 2 116 609** |

EP 0 827 575 B1

## Description

L'invention concerne un dispositif de jonctionnement pour bandes transporteuses ou pour courroies, en forme générale de H, apte à transmettre des forces de traction très importantes d'une extrémité à l'autre d'une bande transporteuse, sur laquelle il est monté, tout en supportant sans usure ni détérioration le passage sur les rouleaux moteurs, de renvoi ou tendeurs utilisés pour le déplacement de la bande transporteuse, ainsi que la mise en auge de la bande transporteuse sur son parcours de travail. Dans la description qui suit, ainsi que dans les revendications, le terme de bande transporteuse englobera le sens de courroie, pour ne pas alourdir le texte.

Dans la demande de brevet WO 95/11393, à laquelle le préambule de la revendication 1 est conforme, le déposant de la présente invention a fait connaître des dispositifs de jonctionnement pour bandes transporteuses, en forme générale de H, comportant une partie centrale, correspondant à la barre de H du profil et deux paires d'ailes disposées de chaque côté de ladite partie centrale, présentant chacune un écartement tel qu'il est possible d'y engager l'extrémité respective d'une bande transporteuse, en la faisant venir approximativement en butée contre la partie centrale et de la fixer auxdites ailes. Les dispositifs de jonctionnement proposés étaient réalisés en une matière souple et élastique dans laquelle était noyée une armature présentant une extensibilité dans le sens longitudinal (le sens longitudinal étant par convention et pour la commodité et la clarté de l'exposé dans l'ensemble de la présente description et des revendications le sens longitudinal de la bande transporteuse, et s'appliquant également au dispositif de fonctionnement considéré tel qu'il doit être monté sur la bande transporteuse). Le sens transversal est le sens perpendiculaire au sens longitudinal ainsi défini, quelles que soient les dimensions du dispositif de jonctionnement considéré isolément. Cette extensibilité des armatures de ce genre de dispositifs de jonctionnement dans le sens longitudinal a pour but de permettre aux dispositifs de fonctionnement montés sur les bandes transporteuses, de franchir de façon répétée, sans usure ni fatigue excessive, entraînant une détérioration rapide, les parties courbes du parcours des bandes transporteuses, à savoir, le contournement des rouleaux d'entraînement, des rouleaux de renvoi et des rouleaux tendeurs. En effet, lors de ce fonctionnement la partie supérieure des dispositifs de jonctionnement subit une force de traction tandis que leur partie inférieure (c'est-à-dire celle orientée vers la surface extérieure des rouleaux) subit une force de compression, et, ce, en raison de la différence du parcours de ces parties, ces parcours étant directement proportionnels au rayon de courbure, qui varie en raison de l'épaisseur des dispositifs de jonctionnement. Dans les dispositifs de jonctionnement faisant l'objet des précédentes demandes, le déposant avait proposé différents moyens de réaliser cette extensibilité des armatures, tissus tissés avec embubage, tricots, câbles métalliques ou en résine de synthèse, à forte résistance à la rupture et à faible extensibilité, mais disposés suivant une forme sinueuse, ou en zig-zag. Comme il faut une limite à l'extensibilité, en vue d'assurer la transmission des forces de traction provoquant le déplacement de la bande transporteuse, cette limite est obtenue dans le cas des tissus par la mise sous tension de fils tissés avec embubage, dans le cas des tricots par la mise sous tension de fils de chaînes insérés de façon lâche dans le tricot au cours du tricotage, et dans le cas des câbles inextensibles, ou insuffisamment extensibles par eux-mêmes, ceux-ci tendaient à se redresser pour prendre une forme plus rectiligne.

Les armatures proposées précédemment ont fait leurs preuves dans de nombreuses applications. Cependant, certaines applications exigent la capacité de transmettre des forces de traction très importantes, et la capacité d'extension des armatures devant toutefois subsister car les conditions du passage sur les rouleaux restent les mêmes, ainsi que celles de la mise en auge. Dans ces applications les solutions proposées précédemment n'étaient pas en mesure de répondre à ce problème spécifique de la transmission de forces de traction très importantes. Ce problème se rencontre notamment dans les installations lourdes, équipant par exemple des chantiers de mines ou de carrières à ciel ouvert, et en particulier, les mines de lignite. Même en employant des câbles inextensibles ou peu extensibles à haute résistance, en acier, fibres de carbone ou de verre, polyamide greffé (ou autres) disposés de façon sinueuse ou en zig-zag, il aurait fallu en disposer un très grand nombre, en les serrant les uns contre les autres ce qui limitait leur liberté de redressement et entraînait des effets pervers de cisaillement de la matière constitutive.

La présente invention a donc pour objet de proposer un dispositif de jonctionnement apte à se prêter temporairement aux différences de parcours subies au passage des rouleaux par leur partie supérieure et leur partie inférieure, tout en restant aptes à transmettre des forces de traction longitudinales très importantes. De plus, l'invention a également pour objet de proposer des dispositifs de jonctionnement aptes à subir une courbure causée par la mise en auge des bandes transporteuses sur leur parcours de travail. Par ailleurs, l'objet de l'invention est de proposer des procédés de réalisation de ces dispositifs de jonctionnement.

Le problème ainsi posé est résolu selon l'invention dans des dispositifs de jonctionnement pour bandes transporteuses, en forme générale de H, constitués d'une partie centrale, ou âme, et de deux paires d'ailes approximativement parallèles, formant une seule pièce avec la partie centrale à laquelle elles se raccordent de part et d'autre de celle-ci, chacune des paires d'ailes étant aptes à être fixées à une extrémité de la bande transporteuse insérée dans l'espace compris entre les ailes de la paire considérée et venant approximativement en butée contre la partie centrale, deux éléments d'armature étant noyés dans la matière constitutive souple et élastique du dispositif de jonctionnement et s'étendant l'un dans l'aile supérieure d'une paire d'ailes, dans la partie centrale et dans l'aile supérieure de l'autre paire d'ailes, et l'autre élément d'armature s'étendant dans l'aile inférieure d'une paire d'ailes, dans la partie centrale, et dans l'aile inférieure de l'autre paire d'ailes, la matière constitutive du dispositif de jonctionnement adhérant aux éléments d'armature, caractérisé en ce que chacun desdits éléments d'armature est constitué d'au moins deux nappes de câbles à forte résistance, inextensibles ou peu extensibles en eux-mêmes, disposées dans des plans parallèles, présentant entre elles un espace, ou des espaces, rempli, ou remplis, de matière adhérant aux câbles des deux nappes, les câbles de chacune des nappes étant disposés de façon rectiligne et étant parallèles entre eux, et formant un angle aigu $\alpha$ avec la direction longitudinale, les câbles d'une nappe se croisant, sur la vue en plan, avec les câbles d'une nappe voisine, située au-dessus ou au-dessous d'elle.

En pratique, comme on le verra plus loin, on utilisera de préférences des nappes préparées à l'avance, dans lesquelles les câbles rectilignes parallèles sont réunis par une matière de liaison, ladite matière de liaison étant soit la même que la matière constitutive des dispositifs de jonctionnement selon l'invention, soit une matière différente, la matière de liaison devant être compatible avec la matière constitutive des dispositifs de jonctionnement, et, en particulier, être susceptible d'adhérer fortement à celle-ci. De même, la matière de liaison doit être susceptible d'adhérer fortement aux câbles. Cette adhésion peut, en pratique, être obtenue à des stades différents de la fabrication mais elle doit exister dans le produit fini, comme on l'expliquera plus loin. Dans le cas où la matière de liaison et la matière constitutive du dispositif de jonctionnement sont des caoutchoucs vulcanisables, l'adhésion de la matière de liaison des câbles d'une part et de la matière constitutive du dispositif de jonctionnement d'autre part, est obtenue au stade de la vulcanisation finale de l'ensemble du dispositif de jonctionnement. Il faut noter que l'espace séparant deux nappes de câbles est rempli, soit de matière de liaison, soit de matière constitutive du dispositif de jonctionnement. Dans la pratique, il est plus facile que cet espace soit rempli par de la matière de liaison de deux nappes préfabriquées voisines. Des procédés de mise en place des nappes de câbles dans les moules de fabrication sont expliqués plus loin. La capacité des dispositifs de jonctionnement selon l'invention de transmettre des forces de traction importantes est obtenue grâce à l'emploi de câbles à très grande résistance à la rupture, qu'il est possible, grâce à la disposition selon l'invention, de prévoir en très grand nombre. La force transmissible par les câbles $F_{tc}$ est exprimée par la relation :

$$F_{tc} = Q \, R_r \, \cos\alpha$$

dans laquelle Q est le nombre de câbles, $R_r$ la résistance à la rupture d'un seul câble, l'angle $\alpha$ étant l'angle aigu que forment les câbles de chaque nappe avec la direction longitudinale. Il faut bien sûr introduire un coefficient de sécurité. On comprend que plus $\alpha$ est petit plus la capacité de transmission de forces de traction par les câbles est importante. Cependant, l'autre condition à respecter, à savoir la capacité du dispositif de jonctionnement à adopter la courbure des rouleaux lors du passage de ceux-ci, et à se courber dans l'autre sens pour suivre la courbure de la bande transporteuse lorsque celle-ci est mise en auge dans son parcours de travail, impose que cet angle $\alpha$ soit important. Le calcul et les essais ont montré qu'un angle de 45° était un bon compromis, mais bien entendu, des angles différents peuvent également être choisis en fonction des applications recherchées.

Cependant, la capacité des câbles à transmettre des forces importantes n'est pas la seule qualité à rechercher. Il faut également que la résistance des câbles au pelage de la matière qui adhère sur eux soit compatible avec la force à transmettre. Il faut pour cela que les câbles aient une surface d'adhésion à la matière qui les entoure qui soit suffisante pour éviter le "pelage" de ladite matière. On calcule des dimensions d'ailes dans la direction longitudinale, telle que la résistance au pelage des câbles qui augmente avec la surface d'adhérence qui augmente elle-même en fonction de la longueur des câbles, donc de la dimension des ailes, soit compatible avec les forces de traction qu'il est prévu de transmettre, avec un coefficient de sécurité, les forces de traction transmissibles par les câbles eux-mêmes devant également, comme dit plus haut, de leur côté être compatible avec les forces de traction qu'il est prévu de transmettre, avec un coefficient de sécurité.

Et de plus, il faut que les éléments d'armature, en liaison avec la matière qui adhère sur les câbles des nappes qui les composent, se prêtent, au passage des rouleaux, aux allongements et aux compressions qui, à cette occasion, affectent les parties supérieures, et respectivement les parties inférieures des dispositifs de jonctionnement. Il faut souligner aussi, ce qui complique le problème posé, que dans nombre d'applications parmi celles visées par la présente invention, et notamment celles des grosses installations de mines et de carrières à ciel ouvert, la bande transporteuse est "mise en auge" sur son parcours de travail, c'est-à-dire que ses bords longitudinaux sont relevés pour former un "auge" destinée à contenir les matériaux transportés en évitant qu'ils ne tombent à côté de la bande transporteuse. La courbure qu'implique cette "mise en auge" s'effectue perpendiculairement à celle qui se produit lors du passage sur les rouleaux. Pour rendre les dispositifs de jonctionnement aptes à prendre successivement ces deux courbures, l'angle $\alpha$ sera de préférence, mais non obligatoirement, car il ne représente en tout cas qu'un compromis, de l'ordre de 45°.

Les allongements et les rétrécissements des éléments d'armature selon l'invention ne sont possibles que grâce à la coop ration de la matière qui adhère aux câbles, qui est souple et élastique, et qui permet une variation de l'angle α, dans le sens d'une diminution dans le cas où s'exercent des forces de traction et dans le sens d'une augmentation dans le cas ou s'exercent des forces de compression. Les courbures imposées aux dispositifs de jonctionnement soit lors du passage sur les rouleaux, soit lors de la mise en auge des éléments, entraînent des différences de longueur des parties concernées du dispositif de jonctionnement qui sont couramment de 6 à 12 % et éventuellement plus, ces différences de longueur se traduisant par des forces de traction et par des forces de compression qui tendent soit à faire diminuer l'angle α soit respectivement à le faire augmenter. Ceci n'est possible que si la matière souple et élastique qui les entoure et qui adhère aux câbles, d'une part, ne se détache pas des câbles, en perdant son adhérence, et d'autre part, ne soit pas soumise à une fatigue trop importante.

Il est bien connu dans l'industrie des caoutchoucs, et dans celle des matières plastiques, que des matières subissant une fatigue excessive sont rapidement détériorées, bien avant le vieillissement normal, et peuvent même se rompre localement, en entraînant la détérioration irrémédiable de l'objet dont elle font partie.

Dans la pratique, et pour les applications courantes envisagées, il s'avère qu'un angle α de 45°, ou proche de 45°, et qu'un écart entre les nappes voisines compris entre la moitié et les trois quarts du diamètre des câbles permettent le mieux de supporter les courbures contradictoires imposées d'une part par les passages sur les rouleaux et d'autre part par la mise en auge, en procurant un bon équilibre en ce qui concerne les propriétés recherchées, tout en évitant de donner une épaisseur excessive aux ailes des dispositifs de jonctionnement selon l'invention. Cependant, il est clair que des dispositifs de jonctionnement selon l'invention, dans lesquels l'angle α est différent de 45°, et dans lesquels l'écart entre les nappes de câbles est différent de celui indiqué plus haut peuvent donner des résultats encore admissibles, en fonction des exigences propres des applications envisagées, sans que l'on sorte pour autant du champ de l'invention. Un angle α compris entre approximativement 30° et 45° est admissible, les meilleurs résultats étant ceux obtenus avec un angle α de 45°.

La liaison des ailes des dispositifs de jonctionnement aux extrémités respectives de la bande transporteuse peut s'effectuer de plusieurs façons différentes, dont certaines peuvent être combinées.

Un premier moyen de liaison consiste en la vulcanisation des faces internes des ailes d'une paire d'ailes avec les faces supérieure et inférieure de l'extrémité concernée de la bande transporteuse. Ce procédé, bien connu, présente l'avantage d'une répartition quasi parfaite des forces de traction et d'une bonne tenue à l'usage. Si la surface des faces vulcanisées est suffisante, et pour cela, il est possible de déterminer la surface des ailes en fonction des applications recherchées, l'adhérence conférée par la vulcanisation permet de faire face sans problème aux forces de traction prévisibles. L'inconvénient de la vulcanisation est la durée de l'opération et de plus, elle ne peut être envisagée qu'avec des caoutchoucs vulcanisables.

Un deuxième moyen de liaison consiste en le collage à froid. Le procédé est plus rapide. Il peut être effectué sur des matières variées, qui ne se limitent pas aux caoutchoucs. Cependant, le collage à froid n'est pas aussi sûr que la vulcanisation. Selon les applications, il sera souvent combiné à un troisième moyen de liaison.

Ce troisième moyen de liaison consiste dans le rivetage qui peut bien entendu être employé seul, ce qui sera souvent le cas. Les rivets traversent chacun successivement une aile, l'extrémité de la bande transporteuse et l'autre aile de la même paire. Les têtes des rivets, c'est-à-dire la tête formée à l'avance et la tête formée à l'autre extrémité des rivets, portent sur les faces extérieures des ailes. De préférence des trous, munis de cuvettes d'appui sur lesquelles portent les têtes, sont ménagés à l'avance dans les ailes lors de la fabrication des dispositifs de jonctionnement selon l'invention. En effet, bien qu'il soit possible d'envisager de placer des rivets dans des ailes exemptes de trous préparés à l'avance, il est très préférable, pour ne pas laisser au hasard ou à l'inspiration de l'utilisateur le nombre de rivets employés et la géométrie de leur implantation, de livrer un produit qui sera obligatoirement utilisé correctement, c'est-à-dire comme prévu par le fabricant de dispositifs de jonctionnement.

En effet, dans le cas des dispositifs de jonctionnement selon l'invention, qui sont destinés à transmettre des forces de traction considérables, il est très important que le nombre de rivets et la géométrie de leur implantation ne soient pas quelconques. En effet, il faut pour déterminer cette géométrie partir du fait qu'il convient de tenir compte de la résistance au peignage dans la carcasse de la bande transporteuse, des rivets envisagés. Connaissant la force de traction globale à transmettre, on détermine d'abord le nombre de rivets à prévoir en divisant la force globale à transmettre par la résistance au peignage d'un rivet dans la carcasse de la bande transporteuse. Selon l'invention, on dispose les rivets de façon telle qu'une même zone longitudinale englobant un rivet ne rencontre pas d'autre rivet. Ceci amène à diviser, mentalement, la largeur des ailes en bandes longitudinales ne comportant qu'un seul trou pour rivet. Cependant, il est clair que le nombre de rivets à poser amènerait à les placer trop près les uns des autres s'ils étaient disposés sur une même ligne transversale, car les rivets transmettant une force de traction qui s'exerce sur les câbles croisés, la résistance au pelage des câbles croisés de la zone d'action de chaque rivet serait insuffisante en raison de la proximité des rivets et de l'étroitesse des zones d'action. Selon l'invention, on décale donc les trous pour rivets voisins d'une distance suffisante dans le sens longitudinal pour que les zones de liaison élastique associant la matière du dispositif de jonctionnement aux câbles croisés de la zone d'action d'un rivet aient une surface suffisante pour que la résistance au pelage des câbles, dans chacune de ces zones d'action soit supérieure à la part de la force de traction globale afférente à un rivet.

Un procédé de fabrication de ces dispositifs de jonctionnement suivant la revendication 11 est également proposé.

Des formes de réalisation de l'invention sont décrites plus loin en liaison avec le dessin, dans lequel :

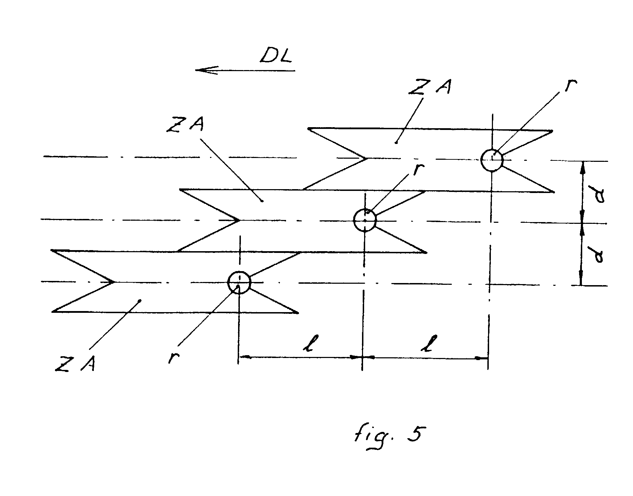

> la figure 1 est une vue en perspective d'un dispositif de jonctionnement du genre défini, auquel s'applique l'invention, en forme générale de H ;
> la figure 2 est une vue en coupe d'un dispositif de jonctionnement et d'une bande transporteuse passant sur un rouleau d'entraînement ;
> la figure 3 est une vue en perspective d'une bande transporteuse et de son dispositif de jonctionnement, dont les bords sont relevés sur son parcours de travail, c'est-à-dire "mis en auge" ;
> la figure 4 représente schématiquement, vu en plan,
>
>> en 4a le dessin des câbles de deux nappes superposées le dispositif de jonctionnement étant au repos,
>> en 4b le dessin des câbles de deux nappes soumises à des forces de traction dans le sens longitudinal, et
>> en 4c le dessin des câbles de deux nappes soumises à des forces de compression dans le sens longitudinal ;
>
> la figure 5 représente schématiquement les zones d'action des rivets résultant de la disposition croisée des câbles de deux nappes superposées.

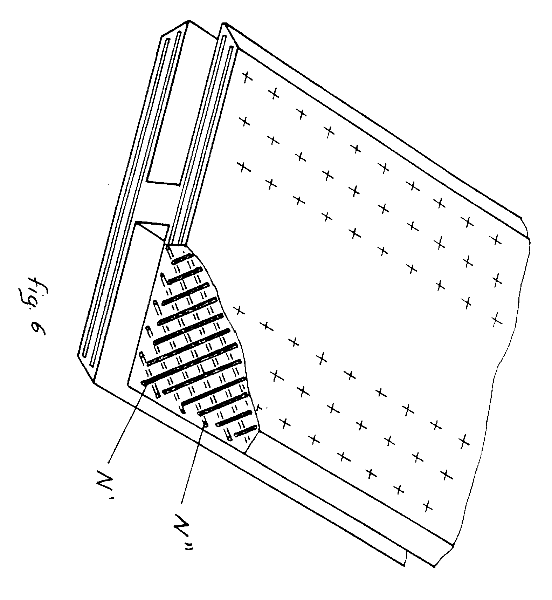

> La figure 6 qui représente en perspective un dispositif de jonctionnement selon l'invention montre, en écorché partiel, un élément d'armature à deux nappes de câbles.

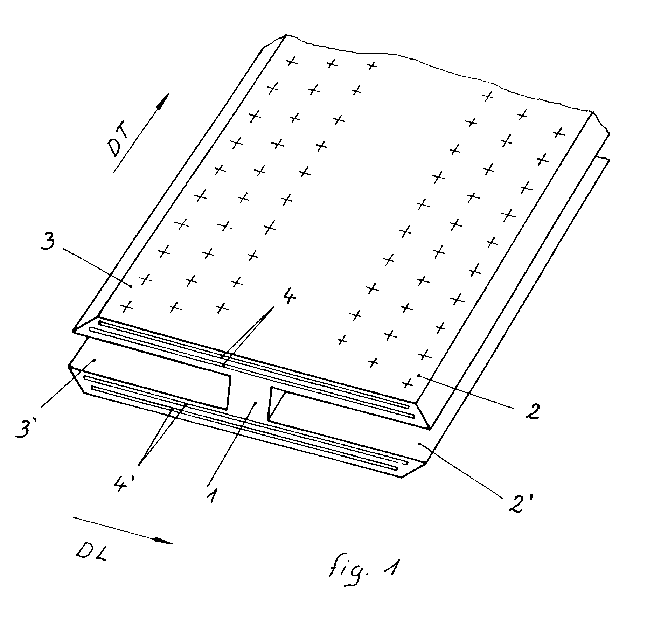

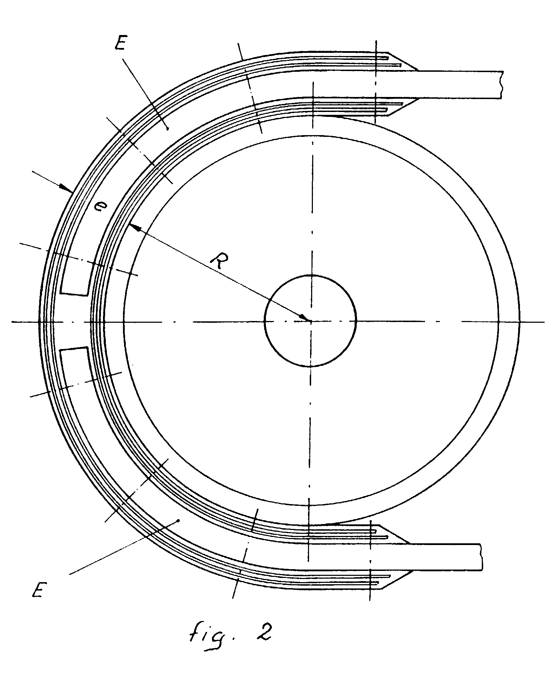

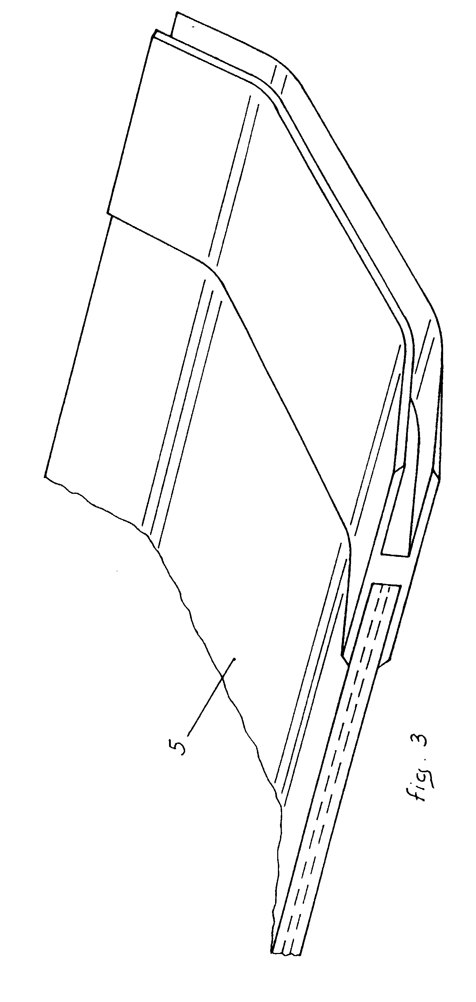

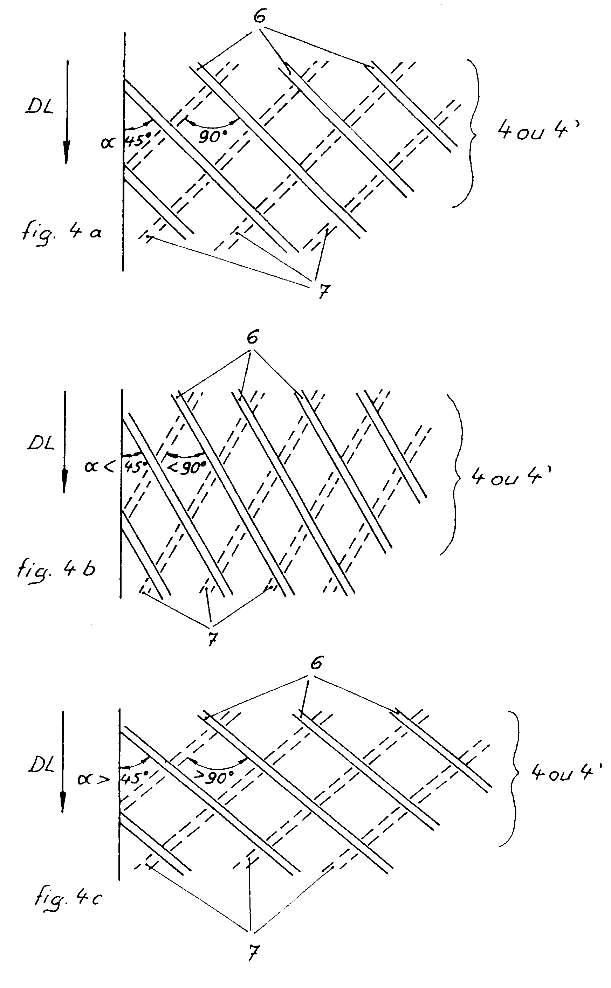

La figure 1 permet de reconnaître la partie centrale 1, ou âme, du dispositif de jonctionnement, les ailes 2, 2' et 3, 3', un élément d'armature supérieur 4 et un élément d'armature inférieur 4'. Cette figure a seulement pour but de montrer les parties principales des dispositifs de jonctionnement du genre défini, le dispositif de jonctionnement tel qu'il est représenté n'étant pas doté des caractéristiques spécifiques de l'invention. La figure 1 comporte également une flèche DT, représentant la direction transversale telle que définie et une flèche DL représentant la direction longitudinale telle que définie.

La figure 2 montre les parcours différents qu'effectuent les parties supérieures des dispositifs de jonctionnement et leurs parties inférieures sur un rouleau de rayon R le dispositif de jonctionnement ayant une épaisseur e. La différence des longueurs de ces parcours peut atteindre 6 à 12 % et même plus, compte-tenu des dimensions couramment données à R et à e. Les parcours se calculent aisément selon la formule consacrée de la circonférence, $2\pi r$, (r étant égal ici à R, à (R + e), ou à des valeurs intermédiaires pour les parties des dispositifs de jonctionnement située à des distances intermédiaires entre R et(R + e), $2\pi r$ étant affecté d'un facteur angulaire qui dépend de l'arc de contact de la bande transporteuse avec le rouleau considéré, ce facteur angulaire étant le plus souvent de 180°/360° soit 1/2.

La figure 3 montre, en perspective la mise en auge d'une bande transporteuse 5 dont les bords sont courbés vers le haut, entraînant une courbure corrélative du dispositif de jonctionnement. On remarque que cette courbure est perpendiculaire à la courbure que subit le dispositif de jonctionnement en passant sur les rouleaux.

La figure 4a est une vue en plan des câbles 6 d'une nappe supérieure d'un élément d'armature 4 ou 4' de dispositif de jonctionnement et des câbles 7 d'une nappe voisine, inférieure, du même élément d'armature 4 ou 4' de dispositif de jonctionnement, à deux nappes à titre d'exemple, le dispositif de jonctionnement étant à l'état de repos. Dans cette forme de réalisation préférée, on remarque que les câbles d'une nappe forment un angle $\alpha$ de 45° avec la direction longitudinale, matérialisée par la flèche DL le long d'un bord et que les câbles 6 d'une nappe se croisent à 90° avec les câbles 7 de l'autre nappe. Pour visualiser les deux nappes de câbles, les câbles 6 sont représentés par un trait plein large et les câbles 7 par deux traits interrompus fins séparés par un espace. Il faut remarquer que pour la commodité de la représentation les câbles ont été représentés avec un écart entre les câbles d'une même nappe très supérieur à ce que voudrait l'échelle rapportée au diamètre des câbles courants qui est de l'ordre de 2 mm.

La figure 4b montre le même élément d'armature soumis à une force de traction dans le sens longitudinal. Les carrés initialement formés par les câbles 6 et 7 vus en plan se transforment en losanges dont la diagonale longitudinale a une dimension supérieure à la diagonale transversale. La matière située autour des câbles des deux nappes, et qui adhère à ceux-ci, travaille en extension, en compression et en torsion.

La figure 4c montre le même élément d'armature soumis à une force de compression dans le sens longitudinal. Il se forme également des losanges mais les dimensions des diagonales varient dans les sens inverses de ceux dans lesquels varient les diagonales des losanges de la figure 4b.

La figure 5 montre schématiquement les zones d'action des rivets ; la forme de ces zones d'action ZA résulte de la disposition croisée des câbles auxquels s'applique la part, transmise par un rivet, de la force de traction globale. La surface de ces zones est grosso modo de 3/2 de 1 x d, 1 étant le décalage des rivets dans le sens longitudinal et d leur décalage dans le sens tranversal. Connaissant la caractéristique de résistance au pelage de la matière des dispositifs de jonctionnement sur les câbles, il est possible de calculer 1, d étant une donnée imposée par le nombre de rivets et par la largeur du dispositif de jonctionnement, c'est-à-dire la dimension de celui-ci dans la direction transversale. Le nombre de rivets est calculé comme indiqué plus haut en fonction de la force totale à transmettre. Bien entendu, tous ces calculs sont affectés de coefficients de sécurité et dans la pratique, on part des problèmes rencontrés couramment chez les utilisateurs pour déterminer des types standard de dispositifs de jonctionnement répondant à ces problèmes. Il est exceptionnel de fabriquer des dispositifs de jonctionnement selon l'invention "sur mesure".

L'écorché de la figure 6 permet de remarquer deux nappes N' et N" de câbles croisées formant un élément d'armature. Les câbles de la nappe N', supérieure, sont en trait épais, ceux de la nappe N", inférieure, sont en double trait. Les croix symbolisent des emplacements pour rivets.

En ce qui concerne la fabrication des dispositifs de jonctionnement, le procédé le plus courant consistera à les réaliser par moulage avec vulcanisation, la matière constitutive du dispositif de jonctionnement et la matière de liaison des câbles étant un caoutchouc vulcanisable ou par moulage par injection si la matière constitutive est une matière de synthèse. Il convient de disposer dans les moules les éléments d'armature décrits plus haut, le plus souvent en deux nappes en ce qui concerne l'élément d'armature supérieur et en deux nappes pour l'élément d'armature inférieur. Le calage de ces nappes dans le moule s'effectue selon des techniques bien connues dans l'art. Si les dispositifs de jonctionnement comportent des trous prévus à l'avance pour la fixation par rivets, des tiges ménageant ces trous dans les produits moulés doivent être prévues. Elles peuvent consister en des tiges solidaires de chaque demi-moule, traversant l'espace intérieur des demi-moules destinés au moulage des ailes respectives du dispositif de jonctionnement, et sur lesquelles les nappes sont enfilées lors de la préparation du moule. A cet effet, il est utile que les tiges de chaque demi-moule aient une extrémité libre de forme conique dont le bout est arrondi de manière à s'insérer entre deux câbles d'une nappe et deux câbles de l'autre nappe sans les détériorer. Il est également possible de remplacer les tiges par des broches amovibles qui traversent l'espace intérieur du demi-moule respectif à partir de l'extérieur et qui sont retirées avant le démoulage. La forme conique à bout arrondi peut être remplacée par une forme ogivale ou par une forme hémisphérique.

La notion de partie centrale du profil en forme générale de H s'entend, pour l'interprétation de la présente description et des revendications qui suivent, de façon très large. Elle englobe, par exemple, des variantes dans lesquelles la partie centrale, servant de butée aux extrémités de la bande transporteuse, est constituée par des éléments séparés les uns des autres par des intervalles vides : le dispositif de jonctionnement peut également être constitué de deux pièces distinctes qui se rejoignent par leur parties centrales lors de la mise en oeuvre, ce qui autorise, par exemple dans une presse de vulcanisation, d'empiler successivement une partie de dispositif de jonctionnement, les extrémités de la bande transporteuse, en butée contre la partie centrale de la première partie de dispositif de jonctionnement, et la deuxième partie de dispositif de jonctionnement dont la partie centrale, passant entre les extrémités de la bande transporteuse, rejoint l'autre partie centrale.

Il est également possible que la barre du II du profil soit, dans le cas d'un dispositif de jonctionnement en deux pièces distinctes, simplement esquissée, par des sortes de moignons qui ne se rejoignent pas, mais qui forment un relief suffisant par rapport au plan des faces intérieures des ailes d'une même paire, pour servir de butée aux extrémités de la bande transporteuse.

Cependant, dans le cas de l'utilisation de rivets passant par des trous préparés à l'avance, il est préférable, que le dispositif de jonctionnement soit en une seule pièce, la partie centrale assurant ainsi un alignement correct des trous des ailes supérieures avec ceux des ailes inférieures ; si cependant le dispositif de jonctionnement est en deux parties, il est préférable, dans ce cas où l'on utilise des rivets, que les moyens formant la partie centrale se rejoignent par des parties mâles et femelles permettant un auto-centrage et, par conséquent, un calage réciproque des deux parties, et, de ce fait, un alignement correct des trous pour rivets.

La présente invention atteint donc parfaitement ses buts, tout en autorisant de nombreuses variantes de réalisation de produits finis en fonction des besoins des industries utilisatrices, ces variantes restant dans le champ des revendications.

**Revendications**

1. Dispositif de jonctionnement pour bandes transporteuses, en forme générale de H, constitué d'une partie centrale (1), ou âme, et de deux paires d'ailes (2,2' ; 3, 3') approximativement parallèles, formant une seule pièce avec la partie centrale à laquelle elles se raccordent de part et d'autre de celle-ci, chacune des paires d'ailes étant apte à être fixée à une extrémité (E) de bande transporteuse insérée dans l'espace compris entre les ailes de la paire considérée et venant approximativement en butée contre la partie centrale (1), deux éléments d'armature (4, 4') étant noyés dans la matière constitutive souple et élastique du dispositif de jonctionnement et s'étendant l'un, (4), dans l'aile supérieure (2) d'une paire d'ailes (2, 2'), dans la partie centrale et dans l'aile supérieure (3) de l'autre paire d'ailes (3, 3'), et l'autre, (4'), élément d'armature s'étendant dans l'aile inférieure (2') d'une paire d'ailes (2, 2') dans la partie centrale (1), et dans l'aile inférieure (3') de l'autre paire d'ailes (3, 3'), la matière constitutive du dispositif de jonctionnement adhérant aux éléments d'armature (4, 4'), caractérisé en ce que chacun desdits éléments d'armature (4, 4') est constitué d'au moins deux nappes (N', N'', ...) de câbles (6 ou 7) à forte résistance, inextensibles ou peu extensibles en eux-mêmes, disposées dans des plans parallèles, présentant entre elles un espace, les câbles (6 ou 7) de chacune des nappes (N', N'', ...) étant disposés de façon rectiligne et étant parallèles entre eux, et formant un angle aigu $\alpha$ avec la direction longitudinale, les câbles d'une nappe (N') se croisant, sur la vue en plan, avec les câbles d'une nappe (N'') voisine, située au-dessus ou au-dessous d'elle.

2. Dispositif de jonctionnement selon la revendication 1, caractérisé en ce que l'angle $\alpha$ est voisin de 45°.

3. Dispositif de jonctionnement selon la revendication 1 ou 2, caractérisé en ce que la matière constitutive du dispositif de jonctionnement est un caoutchouc vulcanisable, vulcanisé à l'état fini.

4. Dispositif de jonctionnement selon la revendication 3, caractérisé en ce qu'une matière de liaison réunit les câbles d'une même nappe, et adhère à ceux-ci.

5. Dispositif de jonctionnement selon la revendication 4, caractérisé en ce que la matière de liaison qui réunit les câbles d'une même nappe et qui adhère à ceux-ci est un caoutchouc vulcanisable, vulcanisé à l'état fini.

6. Dispositif de jonctionnement selon la revendication 1 ou 2, caractérisé en ce que la matière constitutive du dispositif de jonctionnement est une matière de synthèse souple et élastique apte, ou rendue apte, à adhérer aux câbles.

7. Dispositif de jonctionnement selon la revendication 6, caractérisé en ce qu'une matière de liaison réunissant les câbles d'une même nappe et adhérant à ceux-ci est une matière de synthèse apte, ou rendue apte, à adhérer à la matière constitutive du dispositif de jonctionnement.

8. Dispositif de jonctionnement selon l'une des revendications précédentes, caractérisé en ce que des trous pour rivets sont ménagés dans les ailes d'une même paire d'ailes, de façon telle qu'une même zone longitudinale englobant un rivet ne rencontre pas d'autre rivet.

9. Dispositif de jonctionnement selon la revendication 8, caractérisé en ce que le nombre des trous pour rivets est calculé en divisant la force de traction globale à transmettre prévisible par la résistance au peignage d'un rivet dans la carcasse d'une bande transporteuse.

10. Dispositif de jonctionnement selon la revendication 9, caractérisé en ce que chaque trou pour rivets est décalé par rapport au trou ou aux trous pour rivets voisins d'une distance 1 dans le sens longitudinal, la distance 1 étant calculée de manière à ce que la zone d'action de chaque rivet ait une surface suffisante pour que la résistance au pelage de la matière constitutive et/ou de la matière de liaison soit au moins égale, avec un coefficient de sécurité, à la part de la force de traction globale prévisible afférente à chaque rivet.

11. Procédé de fabrication des dispositifs de jonctionnement selon l'une quelconque des revendications précédentes, caractérisé en ce que les nappes de câbles de l'élément d'armature supérieur sont mises en place et calées dans un demi-moule de vulcanisation ou d'injection, celles de l'élément d'armature inférieur l'étant dans l'autre demi-moule.

12. Procédé de fabrication des dispositifs de jonctionnement selon la revendication 11, dans lequel les nappes des éléments d'armature sont enfilées sur des tiges disposées perpendiculairement auxdites nappes, solidaires des demi-moules, dont les extrémités ont une forme conique, la pointe du cône étant arrondie, ou une forme hémisphérique, ou ogivale, et qui traverse l'espace intérieur des demi-moules destiné au moulage des ailes respectives du dispositif de jonctionnement.

13. Procédé de fabrication des dispositifs selon la revendication 11, dans lequel les nappes des éléments d'armature sont enfilées sur des broches amovibles ou rétractables dont les extrémités ont une forme conique, la pointe du cône étant arrondie, ou une forme hémisphérique, ou ogivale, lesdites broches traversant l'espace intérieur des demi-moules destiné au moulage des ailes respectives du dispositif de jonctionnement.

**Patentansprüche**

1. Förderbandverbindungsvorrichtung, im wesentlichen H-förmig ausgebildet, bestehend aus einem Mittelteil (1), oder Kern, und zwei ungefähr parallel angeordneten und mit dem Mittelteil beiderseits verbundenen und aus einem Stück ausgebildeten Flügelpaaren (2, 2'; 3, 3'), wobei jedes Flügelpaar zur Befestigung an einem Ende (E) eines in den Freiraum zwischen den Flügeln des betreffenden Flügelpaares und ungefähr in Anschlag gegen den Mittelteil (1) eingeführten Förderbands geeignet ist, wobei in dem dehnbaren und elastischen Material, aus dem die Verbindungsvorrichtung besteht, zwei Bewehrungselemente (4, 4') eingebettet sind, von denen'sich das eine (4) im oberen Flügel (2) eines Flügelpaares (2, 2'), im Mittelteil und im oberen Flügel (3) des anderen Flügelpaares (3, 3') erstreckt und das andere Bewehrungselement (4') sich im unteren Flügel (2') eines Flügelpaares (2, 2'), im Mittelteil (1) und im unteren Flügel (3') des anderen Flügelpaares (3, 3') erstreckt, wobei das Material, aus dem die Verbindungsvorrichtung besteht an den Bewehrungselementen (4, 4') haftet, dadurch gekennzeichnet, daß jedes der besagten Bewehrungselemente aus mindestens zwei Schichten (N', N'', ...) von hochfesten und selbst nicht oder nur wenig dehnbaren und in untereinander beabstandeten parallelen Ebenen angeordneten Kabeln (6 oder 7) besteht, wobei die Kabel (6 oder 7) jeder Schicht (N', N'', ...) geradlinig und untereinander parallel und in einem spitzen Winkel $\alpha$ zur Längsrichtung angeordnet sind und - in der Draufsicht - die Kabel der einen Schicht (N') sich mit den Kabeln einer über oder unter dieser gelegenen, benachbarten Schicht (N'') überkreuzen.

2. Förderbandverbindungsvorrichtung nach Anspruch 1, dadurch gekennzeichnet, daß der Winkel $\alpha$ nahe bei 45° liegt.

3. Förderbandverbindungsvorrichtung nach Anspruch 1 oder 2, dadurch gekennzeichnet, daß das Material, aus dem die Verbindungsvorrichtung besteht, ein vulkanisierbarer und im Endzustand vulkanisierter Kautschuk ist.

4. Förderbandverbindungsvorrichtung nach Anspruch 3, dadurch gekennzeichnet, daß ein Verbindungsmaterial die Kabel einer jeden Schicht verbindet und daran haftet.

5. Förderbandverbindungsvorrichtung nach Anspruch 4, dadurch gekennzeichnet, daß das die Kabel einer jeden Schicht verbindende und an den Kabeln haftende Verbindungsmaterial ein vulkanisierbarer und im Endzustand vulkanisierter Kautschuk ist.

6. Förderbandverbindungsvorrichtung nach Anspruch 1 oder 2, dadurch gekennzeichnet, daß das Material, aus dem die Verbindungsvorrichtung besteht, ein dehnbarer und elastischer Kunststoff ist, welcher zur Haftung an den Kabeln geeignet ist bzw. geeignet gemacht wird.

7. Förderbandverbindungsvorrichtung nach Anspruch 6, dadurch gekennzeichnet, daß das die Kabel einer Schicht verbindende und an den Kabeln haftende Verbindungsmaterial ein Kunststoff ist, welcher zur Haftung an dem Material, aus dem die Verbindungsvorrichtung besteht, geeignet ist bzw. geeignet gemacht wird.

8. Förderbandverbindungsvorrichtung nach einem der vorangegangenen Ansprüche, dadurch gekennzeichnet, daß in den Flügeln eines jeden Flügelpaares Nietlöcher vorgesehen und derart angeordnet sind, daß ein und derselbe, einen Niet umgebenden Längsbereich auf keinen anderen Niet auftrifft.

9. Förderbandverbindungsvorrichtung nach Anspruch 8, dadurch gekennzeichnet, daß die Anzahl der Nietlöcher dadurch errechnet wird, daß die gesamte voraussichtlich zu übertragende Zugkraft durch den Ausreißwiderstand eines Niets in dem Gerüst eines Förderbands geteilt wird.

10. Förderbandverbindungsvorrichtung nach Anspruch 9, dadurch gekennzeichnet, daß jedes Nietloch gegenüber dem benachbarten Nietloch bzw. der benachbarten Nietlöcher um einen Abstand 1 in Längsrichtung versetzt angeordnet ist, wobei der Abstand 1 derart berechnet ist, daß der Wirkungsbereich eines jeden Niets eine ausreichende Fläche aufweist, damit die Abziehfestigkeit des Materials, aus dem die Verbindungsvorrichtung besteht, und/oder des Verbindungsmaterials mindestens gleich - unter Berücksichtigung eines Sicherheitskoeffizienten - dem auf jeden Niet anfallenden Anteil der gesamten voraussichtlich ausgeübten Zugkraft ist.

11. Verfahren zur Herstellung einer Verbindungsvorrichtung nach einem beliebigen der vorangegangenen Ansprüche, dadurch gekennzeichnet, daß die Kabelschichten des oberen Bewehrungselements in der einen Hälfte eines Vulkanisier- oder Spritzgußformkasten und die des unteren Bewehrungselements in dessen anderen Hälfte angeordnet und festgekeilt werden.

12. Verfahren zur Herstellung einer Verbindungsvorrichtung nach Anspruch 11, dadurch gekennzeichnet, daß die Schichten der Bewehrungselemente auf senkrecht zu den besagten Schichten angeordnete und mit den Formkastenhälften verbundene Stangen aufgeschoben werden, wobei die Stangenenden konisch mit abgerundeter Spitze bzw halbkugel- oder spitzbogenförmig ausgebildet sind, und die Stangen den Innenraum der für das Formen der jeweiligen Verbindungsvorrichtungsflügel vorgesehenen halben Formkästen durchqueren.

13. Verfahren zur Herstellung einer Verbindungsvorrichtung nach Anspruch 11, dadurch gekennzeichnet, daß die Schichten der Bewehrungselemente auf abnehmbare Stifte aufgeschoben werden, wobei die Siftenden konisch mit abgerundeter Spitze bzw. halbkugel- oder spitzbogenförmig ausgebildet sind, und die Stangen den Innenraum der für das Formen der jeweiligen Verbindungsvorrichtungsflügel vorgesehenen halben Formkästen durchqueren.

**Claims**

1. Junction devices for conveyor bands, generally H-shaped, made up with a central part (1) or core, and with two pairs of wings (2, 2'; 3, 3') approximately parallel, forming one single piece with the central part to which they are connected on each side of this latter, each one of the pairs of wings being able to be fixed to one end (E) of the conveyor band inserted in the space included between the wings of the pair considered and approximately in abutment against the central part (1), two reinforcement elements (4, 4') being embedded in the flexible and elastic constituent material of the junction device and extending, the one (4) in the upper wing (2) of one pair of wings (2, 2') in the central part and in the upper wing (3) of the other pair of wings (3, 3') the other reinforcement element (4') extending in the lower wing (2') of one pair of wings (2, 2') in the central part (1) and in the lower wing (3') of the other pair of wings (3, 3') the constituent material of the junction device adhering to the reinforcement elements (4, 4') characterised by the fact that each one of the said reinforcement elements (4, 4') is made up with at least two layers (N', N", ...) of cables (6 or 7) of high resistance, inherently unextensible or slightly extensible, arranged in parallel planes, with a space provided between the layers, the cables (6 or 7) of each one of the layers (N', N", ...) being arranged in a rectilinear way and parallel to each other, and forming an acute angle $\alpha$ with the longitudinal direction, the cables of a layer (N') crossing, on the plan view, the cables of an adjoining layer (N") located above of beneath it.

2. Junction device according to claim 1, characterised by the fact that the angle $\alpha$ is close to 45°.

3. Junction device according to claim 1 or 2, characterised by the fact that the constituent matter of the junction device is a vulcanisable rubber, vulcanised at the finished state.

4. Junction device according to claim 3, characterised by the fact that a binding material joins the cables of one same layer and adheres to these latter.

5. Junction device according to claim 4, characterised by the fact that the binding material joining the cables of one same layer and which adheres to these latter is a vulcanisable rubber, vulcanised at the finished state.

6. Junction device according to claim 1 or 2, characterised by the fact that the constituent material of the junction device is a flexible and elastic synthetic material, suitable or made suitable for adhering to the cables.

7. Junction device according to claim 6, characterised by the fact that a binding material joining the cables of one same layer and adhering to these latter is a synthetic material, suitable or made suitable for adhering to the constituent material of the junction device.

8. Junction device according to one of the preceding claims, characterised by the fact that holes for rivets are provided in the wings of one same pair of wings, in such a way as one same longitudinal zone including a rivet does not meet other rivets.

9. Junction device according to claim 8, characterised by the fact that the number of holes for rivets is calculated by dividing the global expected pulling stress to be transmitted, by the combing resistance of a rivet in the frame of a conveyor band.

10. Junction device according to claim 9, characterised by the fact that each hole for rivets is shifted with respect to the adjoining hole or holes for rivets by a distance $\ell$ in the longitudinal direction, the distance $\ell$ being calculated in such a way as the area of the actuating zone of each rivet is sufficient in order that the peeling resistance of the constituent material and/or of the binding material should be at least equal, bearing a safety coefficient, to the share of the expected global pulling stress assigned to each rivet.

11. Method for manufacturing junction devices according to anyone of the preceding claims, characterised by the fact that the cable layers of the upper reinforcement element is set into position and wedged in a vulcanisation or injection half mould, those belonging to the lower reinforcement element being in the other half mould.

12. Method for manufacturing junction devices according to claim 11, in which the layers of the reinforcement elements are threaded on rods arranged perpendicularly to the said layers, solidly linked to the half moulds, the ends of which have a conical shape, the cone tip being rounded or with a semispherical or ogival shape, which crosses the internal space of the half moulds provided for moulding the respective wings of the junction device.

13. Method for manufacturing junction devices according to claim 11, in which the reinforcement elements layers are threaded on withdrawable or retractable pins, the ends of which have a conical shape, the cone tip being rounded or with a semispherical or ogival shape, the said pins crossing the internal space of the half moulds, provided for moulding respective wings of the junction device.

fig. 1

fig. 2

fig. 3

fig. 4 a

fig. 4 b

fig. 4 c

14

fig. 5

fig. 6